# FASCICULE DE BREVET EUROPEEN

(11) **EP 0 469 981 B1**
(45) Date de publication et mention de la délivrance du brevet: **03.03.1993**
(21) Numéro de dépôt: 91402118.3
(22) Date de dépôt: 29.07.1991
(51) Int. Cl.: B29C 65/52, F21M 7/00, C09J 5/00, B29L 11/00

(54) **Procédé de fixation par collage d'un voyant lumineux sur un socle**
Verfahren zum Befestigen durch Kleben eines Leuchtzeichens auf einem Untersatz
Method of fixing by sticking a signal to a base

(30) Priorité: 01.08.1990 FR 9009832
(43) Date de publication de la demande: 05.02.1992
(73) Titulaire: VALEO VISION, 93012 Bobigny Cédex (FR)
(72) Inventeur: Laurant, Rémi, F-27000 Evreux (FR); Parigot, Jean, F-89100 Saint-Clement (FR); Le Lannou, Michel, F-95120 Ermont (FR)
(74) Mandataire: Lemaire, Marc

(56) Documents cités:
- EP-A- 0 326 276
- FR-A- 2 093 573
- GB-A- 2 010 418
- GB-A- 2 013 512
- US-A- 3 978 156
- PATENT ABSTRACTS OF JAPAN, vol. 2, no. 89, 21 juillet 1978, page 1345 C 78; & DERWENT JAPANESE PATENTS GAZETTE, semaine A23, 17 juillet 1978, Section Ch: Chemical, pages 3,4, Derwent Publications Ltd, Londres, GB; & JP-A-53 047 453 (ASAHI CHEMICAL IND. K.K.) 27-04-1978
- CAOUTCHOUCS & PLASTIQUES, vol. 62, no. 654, octobre 1985, pages 72-73, Paris, FR; "Le soudage électromagnétique"

## Description

La présente invention a pour objet un procédé de fixation d'un voyant sur le boîtier ou socle d'un dispositif d'éclairage ou de signalisation de véhicule automobile tel que, plus particulièrement, un feu de signalisation.

Différents procédés sont actuellement utilisés pour fixer un voyant sur un boîtier ou socle de feu de signalisation.

L'un de ces procédés consiste à maintenir en contact, avec un joint d'étanchéité interposé, le voyant sur le boîtier ou socle, au moyen d'un pluralité de vis.

Un tel procédé, qui se prête mal à une automatisation du montage, n'assure pas'toujours une parfaite étanchéité du feu de signalisation, sauf à assurer en tous points une forte compression du joint d'étanchéité, ce qui risque alors de produire des tensions internes dans le voyant susceptibles d'être à l'origine de fissurations de ce dernier, sous l'effet de la chaleur, des chocs thermiques ou des agressions chimiques pouvant apparaître en fonctionnement.

Un autre procédé connu, dit de soudure miroir, utilisé sur des pièces en matière plastique, consiste à échauffer séparément les surfaces du voyant et du boîtier ou socle destinés à venir en contact, de manière à amener celles-ci jusqu'à un degré de ramollissement tel qu'elles puissent se souder l'une à l'autre par mise en contact avant refroidissement.

Ce procédé permet l'automatisation de la fixation du voyant sur le boîtier ou socle.

Toutefois, il nécessite un outillage spécifique pour chaque type de feu de signalisation.

En outre, ce procédé ne peut être utilisé que si les matières du voyant et du boîtier ou socle sont compatibles entre elles.

Ceci limite par conséquent les choix des matières, et en particulier ce procédé exclut l'utilisation du polypropylène, matière aisément moulable et bon marché, pour le boîtier ou socle, dès lors que le voyant est réalisé en polycarbonate ou en polyméthymétacrylate.

Enfin, ce procédé nécessite une phase terminale de recuit, qui consiste à placer les feux de signalisation en étuve, à une température et pendant un temps suffisants, afin de libérer les tensions internes dans le voyant et dans le boîtier ou socle qui se sont produites au moment du refroidissement après soudure.

De plus, pour des raisons sensiblement analogues, le procédé ci-dessus ne peut pas être mis en oeuvre immédiatement après moulage du voyant et du boîtier ou socle.

Ce procédé implique donc, d'une part, des temps morts pendant lesquels les différentes pièces doivent être stockées et, d'autre part, un traitement systématique en étuve de tous les dispositifs.

On connait également des procédés de collage d'un voyant sur un boîtier ou socle, qui font appel à des colles qui, après durcissement, assurent la tenue mécanique de l'ensemble.

Ces procédés de collage, utilisés principalement pour la fixation de glaces (en verre) de projecteurs, font appel, soit à des colles monocomposants dont le durcissement est assuré sous l'effet de la chaleur, ce qui nécessite ici également un passage en étuve, soit à des colles bicomposants dont le durcissement s'effectue progressivement à température ambiante ou en étuve.

Quoi qu'il en soit, dans les procédés de collage connus, l'ensemble voyant et boîtier ou socle assemblés par collage, doit subir un minimum de manipulations pendant une durée d'un ou plusieurs jours, avant de pouvoir être manipulé normalement, emballé et expédié, sans précautions particulières.

La présente invention a pour but de pallier les inconvénients des procédés connus.

A cet effet, selon l'invention, un procédé de fixation par collage d'un voyant sur le boîtier ou le socle d'un dispositif d'éclairage ou de signalisation de véhicule automobile tel que, plus particulièrement, un feu de signalisation, est caractérisé en ce qu'il consiste à utiliser une colle thermofusible du type réticulable à froid et en ce qu'il comprend la succession des phases suivantes :
a) ladite colle thermofusible est amenée à l'état fondu ou visqueux pour être déposée sous forme d'un cordon mou à la périphérie de l'une des pièces boîtier-socle ou voyant ;
b) l'autre desdites pièces voyant ou boîtier-socle est placée sur la pièce revêtue du cordon de colle, de manière à ce que voyant et boîtier-socle soient assemblés sous pression et à ce que le cordon de colle adhère sur les deux dites pièces en assurant une jonction étanche ;
c) après refroidissement du cordon de colle, le dispositif d'éclairage ou de signalisation est vérifié et contrôlé ;
d) le dispositif d'éclairage est placé dans un conditionnement non étanche de manière que la réticulation de la colle puisse s'effectuer sous l'effet de l'humidité de l'air, à température ambiante.

Ainsi, grâce à l'invention, dès refroidissement du cordon de colle, le dispositif d'éclairage ou de signalisation peut être manipulé sans précautions particulières puisque le cordon de colle assure une tenue mécanique suffisante de l'ensemble.

La réticulation du cordon de colle s'effectue ensuite progressivement pendant une durée de un à plusieurs jours après le collage du voyant sur le boîtier ou socle, pendant que le dispositif d'éclairage ou de signalisation est expédié vers son lieu d'utilisation.

De la sorte il n'y a aucune nécessité de stockage et/ou d'attente avant de pouvoir expédier les dispositifs.

De même, la mise en oeuvre du procédé ne nécessite pas d'outillage spécifique à chaque type de dispositif comme c'est le cas avec le procédé de soudure-miroir.

Avantageusement, et selon une disposition inventive complémentaire du procédé, on réalise une injection de gaz inerte tel qu'azote, dans la colle fondue ou ramollie, de manière à donner au cordon de colle une structure alvéolaire.

Le procédé selon l'invention permet d'obtenir un collage particulièrement résistant et étanche, tout en autorisant, selon un autre aspect de l'invention, dans les heures qui suivent le collage, une reprise des dispositifs d'éclairage ou de signalisation s'il s'avère, après contrôle et vérification, que des imperfections apparaissent.

S'il en est ainsi et selon un point particulier et avantageux de l'invention, le procédé est en outre caractérisé en ce que, après la phase d) ci-dessus, le dispositif d'éclairage ou de signalisation subit une série d'opérations de rectification consistant en :
e) un chauffage en étuve jusqu'à ramollissement et/ou fusion dudit cordon ;
   et en l'une ou l'autre des deux phases suivantes :
f) repositionnement dudit voyant par rapport au boîtier ou socle ou,
g) désolidarisation du voyant et du boîtier ou socle, remplacement des pièces constituantes, réchauffage et nouvel assemblage dudit voyant sur ledit boîtier ou socle,
   et reprise des étapes c) et d) ci-dessus.

Pour l'application particulière du collage d'un voyant sur le boîtier ou socle d'un dispositif d'éclairage ou de signalisation de véhicule automobile la colle, du type thermofusible réticulable à froid, contient en combinaison un composé absorbant les rayons ultra-violets, et une amine à encombrement stérique qui, agissant en synergie, assurent une excellente tenue de la colle.

En particulier, on obtient ainsi une stabilisation de la colle vis-à-vis des rayonnements solaires et des intempéries, ce qui permet de réaliser un dispositif d'éclairage ou de signalisation dont la qualité du collage et l'aspect esthétique ne se dégradent pas par suite du vieillissement et de l'exposition aux rayonnements et intempéries.

De préférence, le composé absorbant les rayons ultra-violets est un composé du type benzotriazole dont la proportion en poids est de préférence comprise entre 0,5 et 1,5 % du poids de la colle. L'amine à encombrement stérique est utilisée dans une proportion de préférence comprise entre 0,5 et 2 % du poids de la colle.

Avantageusement, la colle thermofusible du type réticulable à froid est à base de polyuréthanne réactif à modification acrylique.

Un tel polyuréthanne est décrit dans le brevet européen n° 246 473.

D'autres aspects et avantages du procédé selon l'invention apparaîtront au cours de la description d'un exemple de mise en oeuvre du procédé selon l'invention appliqué au collage d'un feu de signalisation de véhicule automobile.

Dans une première étape du procédé, un socle de feu de signalisation est positionné sur le plateau tournant d'une unité de collage multi-postes.

Après rotation du plateau, ledit socle se présente sous la buse d'un robot encolleur.

Sous l'action d'un élément chauffant et d'un organe de poussée provoquant la fusion, ou à tout le moins un ramollissement jusqu'à un état visqueux suffisant, d'une colle thermofusible du type réticulable à froid, et amenant celle-ci jusqu'à ladite buse, un cordon de colle est déposé dans une gorge à la périphérie dudit socle.

La colle thermofusible du type réticulable à froid est une colle à base d'un polyuréthanne réactif à modification acrylique tel que, par exemple, décrit dans le brevet européen n° 246.473, et qui a subi une modification de manière à lui conférer d'excellentes propriétés de résistance aux agents extérieurs tels que les rayons ultra-violets du rayonnement solaire qui provoquent habituellement un jaunissement des colles, et tels que les intempéries qui sont susceptibles de conduire, après vieillissement, à une dégradation de l'aspect et des conditions d'adhésion de la colle.

Ladite modification consiste essentiellement à ajouter dans la colle un composé absorbant les rayons ultra-violets et une amine à encombrement stérique.

Le composé absobant les rayons ultra-violets, qui est du type benzotriazole, est présent dans une proportion comprise entre 0,5 % et 1,5 % du poids de la colle. La proportion d'amine à encombrement stérique est comprise entre 0,5 et 2 % du poids de la colle.

De manière avantageuse, mais non nécessaire, un gaz inerte, en pratique de l'azote, est injecté sous pression dans la colle, au moment de la dépose du cordon de colle sur le boîtier ou socle, ce qui confère au joint une structure alvéolaire.

Après dépose du cordon de colle, le plateau tournant est actionné et le socle arrive alors à la station de collage proprement dite.

A ce moment-là le voyant du feu de signalisation, préalablement chargé sur un outil de mise en place, est amené sous pression en position de collage sur le socle et son cordon de colle encore à l'état pâteux.

La pression est maintenue quelques instants (environ une minute) jusqu'à ce que le refroidissement de la colle permette d'assurer une adhésivité suffisante sur le socle et sur le voyant et, par conséquent, une solidarisation du voyant au socle permettant sa manipulation sans précaution particulière.

Le cordon de colle assure à la fois la solidarisation du voyant au socle et présente une certaine élasticité.

Ensuite l'ensemble obtenu est déchargé et est immédiatement adressé à d'autres postes de travail pour parfaire l'équipement du feu de signalisation et pour contrôler sa conformité et sa qualité.

Ces opérations terminées, le feu de signalisation est placé en emballage et expédié.

La réticulation de la colle s'effectue progressivement, à froid, sous l'influence de l'humidité ambiante.

La composition de la colle est adaptée pour que cette réticulation soit totale après une durée de un à plusieurs jours.

A l'issue des opérations de contrôle et s'il s'avère que des défauts apparaissent, il peut être, grâce à l'invention, procédé à un déplacement ou même à un décollage du voyant par rapport au socle.

On procède alors, selon l'invention, comme indiqué ci-après.

Le feu de signalisation est chauffé en étuve jusqu'à ce que le cordon de colle soit ramolli suffisamment.

A ce moment-là il est possible de repositionner le voyant si le défaut constaté est un simple défaut de positionnement ; et le voyant est maintenu sous pression contre le socle jusqu'à refroidissement du cordon de colle.

Si nécessaire, une fois le cordon de colle ramolli, le voyant peut être enlevé pour permettre des opérations de reprise du socle. Après quoi il suffit de chauffer à nouveau, en étuve, le cordon de colle et ensuite de repositionner le voyant sur le socle en les maintenant en contact sous pression le temps nécessaire au refroidissement de la colle.

Grâce à l'invention, les opérations de reprises ci-dessus sont rendues possibles, et ce pendant une durée de quelques heures après le collage initial.

On a pu remarquer qu'un dispositif d'éclairage ou de signalisation selon l'invention présente une excellente résistance, à la fois mécanique pour l'adhésion, et vis-à-vis des chocs thermiques et/ou mécaniques et assure une bonne étanchéité.

Lorsqu'on réalise un cordon à structure alvéolaire, on améliore encore la tenue mécanique, en particulier la tenue aux vibrations.

Enfin, grâce aux agents spécifiques introduits dans la colle, l'efficacité et l'aspect de cette dernière, et par conséquent l'aspect du dispositif d'éclairage ou de signalisation, n'évoluent pas défavorablement en fonction du temps, sous l'effet de divers agents extérieurs auxquels est usuellement soumis un tel dispositif.

En effet, le composé absorbant les rayons ultra-violets et l'amine à encombrement stérique agissent en synergie pour assurer la protection du collage.

## Revendications

1. Procédé de fixation par collage d'un voyant sur le boîtier ou le socle d'un dispositif d'éclairage ou de signalisation de véhicule automobile tel que, plus particulièrement, un feu de signalisation, caractérisé en ce qu'il consiste à utiliser une colle thermofusible du type réticulable à froid et en ce qu'il comprend la succession des phases suivantes :
a) ladite colle thermofusible est amenée à l'état fondu ou visqueux pour être déposée sous forme d'un cordon mou à la périphérie de l'une des pièces boîtier-socle ou voyant ;
b) l'autre desdites pièces voyant ou boîtier-socle est placée sur la pièce revêtue du cordon de colle, de manière à ce que voyant et boîtier-socle soient assemblés sous pression et à ce que le cordon de colle adhère sur les deux dites pièces en assurant une jonction étanche ;
c) après refroidissement du cordon de colle, le dispositif d'éclairage ou de signalisation est vérifié et contrôlé ;
d) le dispositif d'éclairage est placé dans un conditionnement non étanche de manière que la réticulation de la colle puisse s'effectuer sous l'effet de l'humidité de l'air, à température ambiante.

2. Procédé selon la revendication 1, caractérisé par une injection de gaz inerte, tel qu'azote, dans la colle fondue ou ramollie, de manière à donner au cordon de colle une structure alvéolaire.

3. Procédé selon la revendication 2, caractérisé en ce que l'injection de gaz inerte est effectuée au moment de la dépose de la colle sur ledit boîtier ou socle.

4. Procédé selon l'une quelconque des revendications 1 à 3, caractérisé en ce que, avant ou après la phase d) de la revendication 1, le dispositif d'éclairage ou de signalisation subit une série d'opérations de rectification consistant en :
e) un chauffage en étuve jusqu'à ramollissement et/ou fusion dudit cordon ;
et en l'une ou l'autre des deux phases suivantes :
f) repositionnement dudit voyant par rapport au boîtier ou socle ou,
g) désolidarisation du voyant et du boîtier ou socle, remplacement des pièces constituantes, réchauffage et nouvel assemblage dudit voyant sur ledit boîtier ou socle,
et reprise des étapes c) et d) de la revendication 1.

## Patentansprüche

1. Verfahren zum Befestigen durch Kleben eines Leuchtzeichens auf dem Gehäuse oder dem Untersatz einer Kraftfahrzeug-Beleuchtungs- oder -Signalvorrichtung, wie zum Beispiel insbesondere einer Signalleuchte, **dadurch gekennzeichnet**, daß es die Verwendung eines Hot-Melt-Klebers in kaltvernetzbarer Ausführung beinhaltet und die Aufeinanderfolge nachstehender Phasen einschließt:
a) der genannte Hot-Melt-Kleber wird im geschmolzenen oder viskosen Zustand zugeführt und in Form einer weichen Raupe an der Peripherie eines der Gehäuse-Untersatz- oder Leuchtzeichen-Teile aufgetragen,
b) das andere der Leuchtzeichen- oder Gehäuse-Untersatz-Teile wird auf das mit der Kleberraupe versehene Teil so aufgesetzt, daß Leuchtzeichen und Gehäuse-Untersatz unter Druck zusammengefügt werden und daß die Kleberraupe an den beiden genannten Teilen haftet und dadurch eine dichte Verbindung gewährleistet,
c) nach Abkühlung der Kleberraupe wird die Beleuchtungs- oder Signalvorrichtung überprüft und kontrolliert,
d) die Beleuchtungsvorrichtung wird in eine nicht dichte Umhüllung eingesetzt, so daß die Vernetzung des Klebers unter Einwirkung der Luftfeuchtigkeit bei Umgebungstemperatur stattfinden kann.

2. Verfahren nach Anspruch 1, **gekennzeichnet durch** die Einleitung eines Inertgases, wie zum Beispiel Stickstoff, in den geschmolzenen oder erweichten Kleber in der Weise, daß die Kleberraupe eine wabenförmige Struktur erhält.

3. Verfahren nach Anspruch 2, **dadurch gekennzeichnet**, daß die Inertgaseinleitung zum Zeitpunkt der Auftragung des Klebers auf dem genannten Gehäuse oder Untersatz erfolgt.

4. Verfahren nach einem der Ansprüche 1 bis 3, **dadurch gekennzeichnet**, daß die Beleuchtungs- oder Signalvorrichtung vor oder nach Phase d) aus Anspruch 1 einer Reihe von Korrekturvorgängen unterworfen wird, die folgendes beinhalten:
e) eine Erwärmung im Ofen bis zur Erweichung und/oder zum Schmelzen der genannten Raupe,
sowie die eine oder andere der folgenden Phasen:
f) Neupositionierung des genannten Leuchtzeichens im Verhältnis zum Gehäuse oder Untersatz oder
g) Ablösung des Leuchtzeichens oder Gehäuses oder Untersatzes, Austausch von Bestandteilen, Erwärmung und neuerlicher Zusammenbau des genannten Leuchtzeichens am genannten Gehäuse oder Untersatz,
sowie die Wiederholung der Schritte c) und d) aus Anspruch 1.

## Claims

1. A method of adhesively securing a translucent cover on the housing or base of a lighting or indicating device for a motor vehicle, for example, and more particularly, an indicating display, characterised in that it comprises using a thermoplastic adhesive of the cold curing type, and in that it includes the following successive steps:
(a) the said thermoplastic adhesive is brought to the melted or viscous state so as to be deposited in the form of a soft band on the periphery of one of the components consisting of the housing or base and the translucent cover;
(b) the other of the said components consisting of the translucent cover and the housing or base is placed on the component that is overlaid with the band of adhesive, in such a way that the translucent cover and the housing or base are assembled together under pressure, and so that the band of adhesive adheres on both of the said components to ensure a sealed joint;
(c) after the band of adhesive has cooled, the lighting or indicating device is tested and inspected;
(d) the lighting device is placed in unsealed conditions such that curing of the adhesive can take place under the effect of the humidity of the air at ambient temperature.

2. A method according to Claim 1, characterised by an injection of inert gas such as nitrogen into the melted or softened adhesive, whereby to confer a porous structure on the band of adhesive.

3. A method according to Claim 2, characterised in that the injection of inert gas is carried out at the instant of deposition of the adhesive on the said housing or base.

4. A method according to any one of Claims 1 to 3, characterised in that, before or after step (d) of Claim 1, the lighting or indicating device undergoes a series of rectifying operations comprising:
(e) heating in an autoclave until softening and/or melting of the said band takes place;
together with either one of the two following steps:
(f) repositioning of the said translucent cover with respect to the housing or base, or
(g) separation of the translucent cover and the housing or base from each other, replacement of the components, reheating, and reassembly of the said translucent cover on the said housing or base,
- and repeating steps (c) and (d) of Claim 1.
